(19) Europäisches Patentamt
European Patent Office
Office européen des brevets

(11) **EP 3 278 081 B1**

(12) **FASCICULE DE BREVET EUROPEEN**

(45) Date de publication et mention
de la délivrance du brevet:
**13.01.2021 Bulletin 2021/02**

(21) Numéro de dépôt: **16731190.1**

(22) Date de dépôt: **01.04.2016**

(51) Int Cl.:
**G01N 15/12** *(2006.01)* **G01N 15/10** *(2006.01)*

(86) Numéro de dépôt international:
**PCT/FR2016/050738**

(87) Numéro de publication internationale:
**WO 2016/156751 (06.10.2016 Gazette 2016/40)**

(54) **DISPOSITIF DE COMPTAGE DE PARTICULES**

VORRICHTUNG ZUM ZÄHLEN VON PARTIKELN

DEVICE FOR COUNTING PARTICLES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.04.2015 FR 1552874**

(43) Date de publication de la demande:
**07.02.2018 Bulletin 2018/06**

(73) Titulaire: **Horiba ABX SAS**
**34184 Montpellier (FR)**

(72) Inventeur: **COUDERC, Guilhem**
**34430 St Jean de Védas (FR)**

(74) Mandataire: **Cabinet Netter**
**36, avenue Hoche**
**75008 Paris (FR)**

(56) Documents cités:
**FR-A1- 2 260 834    GB-A- 1 445 703
JP-U- S5 061 077    US-A- 3 557 352
US-A- 4 110 604    US-A1- 2001 032 495**

## Description

L'invention concerne le comptage de particules en flux et en suspension dans un fluide, notamment pour la cytométrie de flux et l'hématologie.

Une des mesures de comptage en cytométrie de flux repose sur la mesure de la variation d'une impédance dans une zone de mesure lorsqu'une ou plusieurs particules sont guidées à travers celle-ci en flux, appelée méthode de Coulter. Le nombre de changements d'impédance indique le nombre de particules tandis que la valeur de l'impédance mesurée est proportionnelle au volume de la particule. La technique de comptage actuellement utilisée en cytométrie sur les instruments courant est basée sur la détection d'événement d'amplitude supérieure à un seuil. Chaque passage de seuil correspond à un événement. La méthode de Coulter peut être utilisée pour compter des particules endogènes ou exogènes comme des cellules, des vésicules, des parasites, des billes, des virus, des polluants, ou encore des toxines.

La demande de brevet US 2001/032495 A1 décrit un dispositif de comptage de particules corrigeant les variations de la ligne de base du signal de mesure en lui soustrayant un signal de retour correspondant au signal de mesure sur lequel un filtre passe-bas à été appliqué. Ce signal corrigé est ensuite utilisé pour compter les particules.

En électronique, certains systèmes utilisent des comparateurs à filtre passe-bas pour indiquer la détection d'événements à l'origine de variations du signal (voir par exemple le modèle d'utilité JPS5061077U).

Le principal défaut du principe de ce comptage est un manque de résolution en présence d'un nombre élevé d'événements. Dans ce cas, il y a des coïncidences de deux ou plusieurs évènements qui ne peuvent être distingués les uns des autres. En effet, il peut arriver que deux ou plusieurs particules passent plus ou moins simultanément dans la zone de mesure et interagissent ainsi ensemble, ce qui a une incidence sur l'impédance mesurée. Lorsque le nombre de particules à compter augmente beaucoup, les coïncidences deviennent de plus en plus fréquentes, et la détection peut être limitée par la résolution du capteur.

En présence d'un nombre très important d'évènements, la coïncidence devient telle que le signal mesuré ne descend quasiment plus en dessous du niveau du seuil. Ainsi, au-delà d'un certain nombre, l'augmentation de la fréquence des évènements se traduit par une décroissance du comptage. Afin d'éviter de renvoyer des mesures totalement faussées par ce phénomène de saturation, un système d'alarmes basé sur un indicateur tel que le temps d'occupation du capteur est prévu pour indiquer la présence d'une saturation du capteur.

Pour compenser les événements non détectés du fait des coïncidences, une correction du comptage par la mesure du temps d'occupation est possible.

La correction de coïncidence ou linéarisation consiste à extrapoler le nombre d'évènements réels à partir des événements comptés. Cette extrapolation est d'autant plus importante que le nombre d'évènements est grand, ayant pour conséquence d'augmenter l'incertitude de comptage.

Les méthodes de linéarisation reposent sur de l'extrapolation. Elles sont donc complexes à mettre en œuvre, exigent une calibration spécifique pour chaque machine produite, et posent des problèmes de vérification.

Par conséquent, plus le nombre de particules à compter est important, plus il est nécessaire de fortement corriger le nombre d'évènements comptés, ce qui a pour conséquence d'augmenter l'incertitude sur les mesures réalisées. Dans le cas où le capteur est saturé, l'incertitude sur le résultat est trop importante pour être corrigée.

L'invention vient améliorer la situation. A cet effet, l'invention propose un dispositif de comptage de particules comprenant un détecteur agencé pour produire un signal de mesure électrique en réponse au passage d'une ou plusieurs particules, et un comparateur agencé pour comparer le signal de mesure avec un signal seuil et pour incrémenter une valeur de comptage lorsque le signal de mesure dépasse le signal seuil. Ce dispositif comprend un circuit d'ajustement de seuil qui applique un filtre passe-bas au signal de mesure, et qui est relié au comparateur pour utiliser le signal résultant comme signal seuil.

Ce dispositif est avantageux car le signal seuil est mobile en fonction du signal détecté. Ainsi, lorsque le signal détecté augmente du fait de la détection de nombreux passages, le seuil de détection augmente aussi. Cela améliore la résolution du dispositif et permet de perdre moins de comptages.

Dans divers modes de réalisations particuliers, le dispositif peut présenter l'une ou la combinaison de plusieurs de caractéristiques suivantes :

- le comparateur et le circuit d'ajustement sont réalisés de manière analogique, le circuit d'ajustement comprenant une résistance et une capacité montées en série, et le comparateur étant un amplificateur opérationnel en mode comparateur dont une entrées reçoit le signal de mesure, et l'autre entrée est reliée au circuit d'ajustement entre la résistance et la capacité ;
- le comparateur est monté entre au moins deux résistances d'hystérésis ;
- le dispositif comprend en outre un convertisseur analogique numérique pour numériser le signal de mesure, et le comparateur et le circuit d'ajustement de seuil sont réalisés sous forme numérique ;
- le circuit d'ajustement de seuil est un filtre à réponse impulsionnelle finie d'ordre 1 ;
- le dispositif comprend en outre un circuit assurant une valeur minimale au signal seuil ;
- le dispositif comprend un amplificateur opérationnel monté en mode suiveur entre sa sortie et son entrée positive, une source de tension reliée à son entrée négative, et une diode entre la sortie de l'amplificateur opérationnel et le circuit d'ajustement de seuil ;

- le dispositif comprend en outre un circuit de déclenchement comprenant un amplificateur opérationnel monté en mode comparateur dont une entrée reçoit le signal de mesure, et l'autre entrée est reliée à la source de tension, et
- le signal de mesure est produit par la méthode Coulter, et la fréquence de coupure du filtre passe-bas est inférieure à 200 Hz.

L'invention propose également un procédé de comptage de particules comprenant les opérations suivantes :

a) Produire un signal de mesure électrique en réponse à la détection du passage d'une ou plusieurs particules par un détecteur,
b) Produire un signal de seuil mobile en appliquant un filtre passe-bas de fréquence choisie au signal issu de l'opération a),
c) Comparer le signal de mesure et le signal de seuil mobile et incrémenter une valeur de comptage lorsque le signal de mesure excède le signal de seuil mobile d'une quantité choisie.

D'autres caractéristiques et avantages de l'invention apparaîtront mieux à la lecture de la description qui suit, tirée d'exemples donnés à titre illustratif et non limitatif, tirés des dessins sur lesquels :

- la figure 1 représente un diagramme schématique d'une partie d'un dispositif selon l'invention,
- la figure 2 représente un diagramme électrique d'un élément de la figure 1, et
- la figure 3 représente un diagramme électrique en variante de la figure 2.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

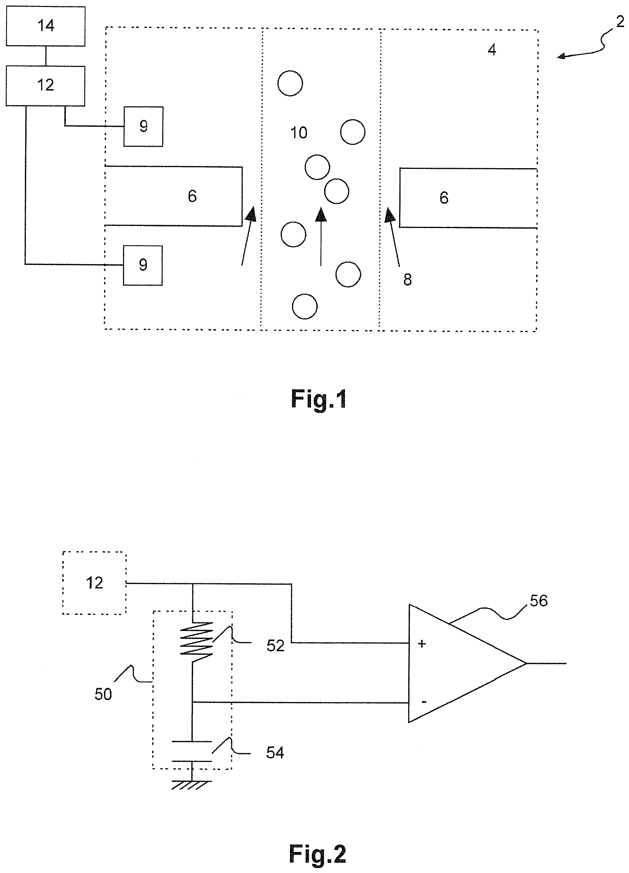

La figure 1 représente un dispositif de comptage 2 selon l'invention. On considère dans ce qui suit que le dispositif 2 est dédié à l'inspection (ou analyse) d'un fluide se présentant sous la forme d'un échantillon hématologique, en vue d'un comptage des cellules sanguines. Mais, l'invention n'est limitée ni à ce type de fluide, ni au comptage en impédance. Elle concerne en effet tout type de fluide, tout type de compteur en flux, et notamment le cytomètre en flux. Elle pourra également être utilisée pour compter des billes ou toute autre particule.

Comme cela est illustré sur la figure 1, le dispositif 2, selon l'invention comporte tout d'abord une cuve de mesure 4, du type hydrofocalisé, comme par exemple celle décrite dans le document brevet FR 2 653 885. Il est entendu que le dispositif peut être de type non hydrofocalisé.

De façon simplifiée, une telle cuve 4 comporte une paroi interne dans laquelle est placée une buse de focalisation 6, généralement en saphir et définissant un orifice calibré, dans l'exemple décrit ici de 60 μm de diamètre. La paroi définit un logement interne 8 dans lequel est placé un capillaire (non représenté), et dont l'extrémité est située en regard de la buse 6 et à une petite distance de celle-ci. Ce capillaire est destiné à acheminer le fluide à inspecter en amont de la buse 6 afin d'y être canalisé sous la forme d'un flux primaire 10 par un fluide gainant secondaire circulant dans ledit logement interne 8, autour du capillaire.

Cette réalisation permet d'obtenir un effet de gainage hydrodynamique de l'échantillon comprenant les cellules du sang débouchant dans une zone ou région dite de mesure. La figure 1, avec la buse 6, est une vue rapprochée du dispositif au niveau de cette zone de mesure. Dans l'exemple décrit ici, le flux primaire 10 analysé est du sang préparé, qui circule dans le canal 2 dans le sens désigné par une flèche sur la figure 1.

Un détecteur 12 est relié à la cuve 4 au niveau de la buse 6, et comprend une source de courant de sorte que la buse 6 est traversée par un courant électrique. En l'absence de cellule, le flux primaire 10 et le fluide gainant définissent une impédance de charge qui est mesurée par deux électrodes 9 placées de chaque côté de la buse 6. Lorsqu'une cellule du sang est dans le flux primaire 10, elle entraîne une augmentation d'impédance. Cette variation d'impédance permet de déterminer, d'une part, le volume de la cellule (mesure qualitative), d'autre part, d'effectuer un comptage cellulaire (mesure quantitative). Le détecteur 12 forme donc un détecteur qui produit un signal électrique en réponse au passage d'une ou plusieurs particules. Le détecteur 12 peut comprendre un amplificateur et des filtres afin de produire un signal de mesure exploitable par le circuit électronique 14.

Le détecteur 12 émet un signal électrique qui reflète l'impédance mesurée au niveau de la buse 6 vers un circuit électronique 14. Le circuit électronique 14 a pour rôle de réaliser une mesure de cellules à partir du signal émis par le détecteur 12.

Le circuit électronique 14 va maintenant être décrit en référence à la figure 2.

Le circuit électronique 14 comprend deux portions :

- un circuit d'ajustement de seuil 50 comprenant une résistance 52 et une capacité 54, et
- un comparateur 56.

Le circuit d'ajustement de seuil 50, constitué de la résistance 52 et de la capacité 54 placées en série forme un filtre passe-bas. Il est directement relié au détecteur 12 du côté de la résistance 52, et à la masse du côté de la capacité 54. Dans l'exemple décrit ici, la résistance 52 a une valeur de 6 kOhms, et la capacité 54 a une valeur de 1 nF, soit une fréquence de coupure à 166,67 Hz. La valeur de la fréquence de coupure est calculée selon un compromis entre la résolution des passages coïncidents et l'immunité aux bruit et autres phénomène telle que la déformation due à un passage en bord dans le cas d'une mesure en flux non hydrofocalisée. Les tests de la Demanderesse ont montré qu'une variation de 10% de la valeur de RC entraîne une variation de 0,6% dans le nombre de cellules comptées et donc une grande tolérance aux composants du commerce.

Dans l'exemple décrit ici, le comparateur 56 est un amplificateur opérationnel de type TLE2071 vendu par Texas Instruments (marque enregistrée). L'entrée négative du comparateur 56 est reliée au circuit d'ajustement de 50 entre la résistance 52 et la capacité 54. L'étude du circuit d'ajustement de seuil 50 montre que la tension S(t) à l'entrée négative du comparateur 56 est reliée au signal de mesure M(t) issu du détecteur 12 selon la relation suivante :

$$M(t) = RC\frac{dS(t)}{dt} + S(t)$$

soit, en instantané :

$$M(n) = \tau\frac{S(n) - S(n-1)}{dt} + S(n)$$

L'amplificateur opérationnel est ainsi monté en mode comparateur, de sorte qu'à sa sortie, il émet une tension positive si le signal de mesure M(t) issu du détecteur 12 est supérieur au signal seuil S(t) issu du circuit d'ajustement de seuil 50, sinon 0.

Grâce à cet agencement électronique, le signal seuil mobile « suit » la valeur du signal de mesure. Ainsi, lorsque plusieurs cellules passent simultanément en sortie de la buse 6, même avec l'augmentation du signal de mesure, le dispositif conserve une excellente résolution car le signal seuil est proche du signal de mesure, sans empêcher la détection.

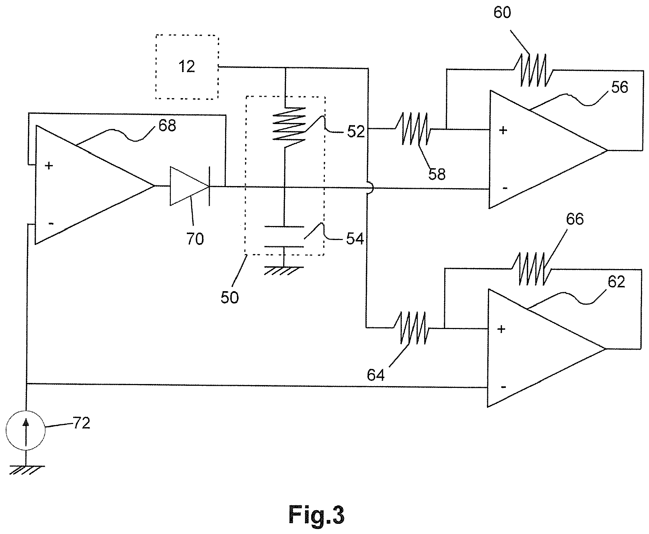

Dans ce qui précède, un dispositif de cytométrie en flux permettant de faire des mesures quantitatives a été décrit. La figure 3 représente un mode de réalisation en variante, plus sophistiqué que celui de la figure 2, qui peut par exemple être utilisé pour un dispositif de comptage de particule permettant en outre de réaliser une mesure qualitative.

Le circuit électronique 14 comprend dans ce mode de réalisation quatre portions :

- un circuit d'ajustement de seuil 50 comprenant une résistance 52 et une capacité 54,
- un comparateur 56 entouré de deux résistances 58 et 60, pour le comptage à seuil mobile,
- un comparateur 62 entouré de deux résistances 64 et 66, pour les mesures qualitatives, et
- un comparateur 68 couplé à une diode 70 et une source de tension 72.

Le circuit d'ajustement de seuil 50 comprenant la résistance 52 et la capacité 54 placées en série forme un filtre passe-bas. Il est directement relié au détecteur 12 du côté de la résistance 52, et à la masse du côté de la capacité 54. Comme pour le mode de réalisation de la figure 2, la résistance 52 a une valeur de 6 kOhms, et la capacité 54 a une valeur de 1 nF, soit une fréquence de coupure à 166,67 Hz.

La sortie du comparateur 56 est bouclée sur son entrée positive, et la résistance 64 est reliée d'une part à cette entrée positive et d'autre part au détecteur 12. La résistance 66 est branchée en série dans la boucle. L'entrée négative du comparateur 56 est reliée au circuit d'ajustement de seuil 50 entre la résistance 52 et la capacité 54.

Dans l'exemple décrit ici, la résistance 64 a une valeur de 22 kOhms, et la résistance 66 a une valeur de 1 MOhm. Ensemble les résistances 64 et 66 fixent une hystéréris de 110 mV pour le comparateur 56 dans l'exemple décrit ici pour une tension de sortie limitée à 5V. Cette hystérésis permet une immunité au bruit lorsque le signal croise le seuil mobile ou le seuil fixe.

Dans l'exemple décrit ici, le comparateur 62 est identique au comparateur 56, et les résistances 64 et 66 sont identiques aux résistances 58 et 60. L'entrée positive du comparateur 62 reçoit le signal de mesure du détecteur 12, tandis que l'entrée négative est reliée à la source de tension 72. Comme le comparateur 62 est monté en mode comparateur, il émet une tension en sortie positive si le signal de mesure est supérieur à la valeur de la source de tension 72, sinon 0. Ainsi, la sortie du comparateur 62 peut être utilisée pour réaliser des mesures qualitatives sur la base du signal émis par le détecteur 12, ou encore pour commander le déclenchement d'une source de lumière pour une mesure en aval lorsque le détecteur 12 détecte le passage d'une cellule.

Dans l'exemple décrit ici, le comparateur 68 est identique au comparateur 56, et sa sortie est reliée à la diode 70 montée en boucle avec l'entrée positive du comparateur 56, tandis que la source de tension 68 est reliée à l'entrée négative du comparateur 68. La diode 70 est montée pour ne laisser passer le courant que depuis le comparateur 68, et est reliée au circuit d'ajustement de seuil 50 entre la résistance 52 et la capacité 54. Ainsi, cette portion assure que le signal de seuil S(t) ne peut pas descendre en-dessous d'une valeur fixée par la source de tension 72. Dans l'exemple, cette valeur est celle de la tension de seuil fixe de déclenchement de comptage classique ou de mesure qualitative.

Les deux modes de réalisation décrits aux figures 2 et 3 pourraient être combinés. Ainsi, la portion visant à garantir une valeur du signal seuil supérieure au seuil fixe et les résistances d'hystérésis pourraient néanmoins être incluses séparément ou ensemble au mode de réalisation de la figure 2, de même qu'elles pourraient être retirées ensemble ou séparément du mode de réalisation de la figure 3.

Dans ce qui précède, le circuit électronique 14 a été décrit comme étant un dispositif analogique. En variante, le dispositif peut comprendre un convertisseur analogique numérique qui reçoit le signal de mesure du détecteur 12, et va réaliser le circuit d'ajustement 50 par la mise en œuvre d'un filtre numérique à réponse impulsionnelle finie d'ordre 1, et d'un comparateur numérique du signal de mesure et du signal seuil en sortie du filtre.

Ce type de filtre obéit à l'équation suivante :

$$S(n) = kM(n) + (1-k)S(n-1)$$

Afin de réduire les ressources nécessaires, le coefficient k du filtre numérique est choisi pour être une puissance de 2, ou son inverse. De ce fait la multiplication est réalisée par décalage logique à gauche ou à droite. Cette méthode limite les possibilités de réglage de la fréquence de coupure du filtre, mais elle présente l'avantage d'être très facile à réaliser.

## Revendications

1. Dispositif de comptage de particules comprenant un détecteur (12) agencé pour produire un signal de mesure électrique en réponse au passage d'une ou plusieurs particules, et un comparateur (56) agencé pour comparer le signal de mesure avec un signal seuil et pour incrémenter une valeur de comptage lorsque le signal de mesure dépasse le signal seuil, **caractérisé en ce qu'**il comprend en outre un circuit d'ajustement de seuil (50) qui applique un filtre passe-bas (52,54) au signal de mesure, et qui est relié au comparateur (56) pour utiliser le signal résultant comme signal seuil.

2. Dispositif selon la revendication 1, dans lequel le comparateur (56) et le circuit d'ajustement (50) sont réalisés de manière analogique, le circuit d'ajustement (50) comprenant une résistance (52) et une capacité (54) montées en série, et le comparateur (56) étant un amplificateur opérationnel en mode comparateur dont une entrée reçoit le signal de mesure, et l'autre entrée est reliée au circuit d'ajustement (50) entre la résistance (52) et la capacité (54).

3. Dispositif selon l'une des revendications précédentes, dans lequel le comparateur (56) est monté entre au moins deux résistances (58,60) d'hystérésis.

4. Dispositif selon la revendication 1, comprenant en outre un convertisseur analogique numérique pour numériser le signal de mesure, et dans lequel le comparateur (56) et le circuit d'ajustement de seuil (50) sont réalisés sous forme numérique.

5. Dispositif selon la revendication 4, dans lequel le circuit d'ajustement de seuil (50) est un filtre à réponse impulsionnelle finie d'ordre 1.

6. Dispositif selon l'une des revendications précédentes, comprenant en outre un circuit (68,70,72) assurant une valeur minimale au signal seuil.

7. Dispositif selon la revendication 6 comprenant un amplificateur opérationnel (68) monté en mode suiveur entre sa sortie et son entrée positive, une source de tension (72) reliée à son entrée négative, et une diode (70) entre la sortie de l'amplificateur opérationnel (68) et le circuit d'ajustement de seuil (50).

8. Dispositif selon la revendication 7, comprenant en outre un circuit de déclenchement comprenant un amplificateur opérationnel (62) monté en mode comparateur dont une entrée reçoit le signal de mesure, et l'autre entrée est reliée à la source de tension.

9. Procédé de comptage de particules comprenant les opérations suivantes :

   a) Produire un signal de mesure électrique en réponse à la détection du passage d'une ou plusieurs particules par un détecteur (12),
   b) Produire un signal de seuil mobile en appliquant un filtre passe-bas de fréquence choisie au signal issu de l'opération a),
   c) Comparer le signal de mesure et le signal de seuil mobile et incrémenter une valeur de comptage lorsque le signal de mesure excède le signal de seuil mobile d'une quantité choisie.

10. Procédé selon la revendication 9, dans lequel le signal de mesure est produit par la méthode Coulter, et dans lequel la fréquence de coupure du filtre passe-bas est inférieure à 200 Hz.

## Patentansprüche

1. Partikelzählvorrichtung, umfassend einen Detektor (12), der zum Produzieren eines elektrischen Messsignals als Reaktion auf eine Passage von einem oder mehreren Partikeln eingerichtet ist, und einen Komparator (56), der zum Vergleichen des Messsignals mit einem Schwellensignal und zum inkrementieren eines Zählwerts, wenn das Messsignal das Schwellensignal übersteigt, eingerichtet ist, **dadurch gekennzeichnet, dass** sie weiterhin eine Schwellenjustierschaltung (50) umfasst, die ein Tiefpassfilter (52, 54) auf das Messsignal anwendet und die zum Nutzen des resultierenden Signals als Schwellensignal mit dem Komparator (56) verbunden ist.

2. Vorrichtung nach Anspruch 1, wobei der Komparator (56) und die Justierschaltung (50) analog realisieren sind, wobei die Justierschaltung (50) einen Widerstand (52) und eine Kapazität (54), die in Reihe geschaltet sind, umfasst und der Komparator (56) ein Funktionsverstärker im Komparatormodus ist, von dem ein Eingang das Messsignal empfängt und der andere Eingang mit der Justierschaltung (50) zwischen dem Widerstand (52) und der Kapazität (54) verbunden ist.

3. Vorrichtung nach einem der vorhergehenden Ansprüche, wobei der Komparator (56) zwischen mindestens zwei Hysterewiderständen (58, 60) geschaltet ist.

4. Vorrichtung nach Anspruch 1, weiterhin umfassend einen Analog-Digital-Wandler zum Digitalisieren des Messsignals, und wobei der Komparator (56) und die Schwellenjustierschaltung (50) in digitaler Form realisieren sind.

5. Vorrichtung nach Anspruch 4, wobei die Schwellenjustierschaltung (50) ein endliches Impulsantwortfilter der Größenordnung 1 ist.

6. Vorrichtung nach einem der vorhergehenden Ansprüche, weiterhin umfassend eine Schaltung (68, 70, 72), die einen Mindestwert des Schwellensignals sicherstellt.

7. Vorrichtung nach Anspruch 6, umfassend einen Funktionsverstärker (68), der in einem Folgermodus zwischen ihrem Ausgang und ihrem positiven Eingang geschaltet ist, eine Spannungsquelle (72), die mit ihrem negativen Eingang verbunden ist, und eine Diode (70) zwischen dem Ausgang des Funktionsverstärkers (68) und der Schwellenjustierschaltung (50).

8. Vorrichtung nach Anspruch 7, weiterhin umfassend eine Auslöseschaltung, umfassend einen Funktionsverstärker (62), der in einem Komparatormodus geschaltet ist und von dem ein Eingang das Messsignal empfängt und der andere Eingang mit der Spannungsquelle verbunden ist.

9. Partikelzählverfahren, umfassend die folgenden Arbeitsschritte:

    a) Produzieren eines elektrischen Messsignals als Reaktion auf die Erfassung der Passage von einem oder mehreren Partikeln durch einen Detektor (12),
    b) Produzieren eines mobilen Schwellensignals durch Anwenden eines Tiefpassfilters mit einer ausgewählten Frequenz auf das aus Arbeitsschritt a) entstandene Signal,
c) Vergleichen des Messsignals und des mobilen Schwellensignals und inkrementieren eines Zählwerts, wenn das Messsignal das mobile Schwellensignal um einen ausgewählten Betrag übersteigt.

10. Verfahren nach Anspruch 9, wobei das Messsignal durch die Coulter-Methode produziert wird und wobei die Grenzfrequenz des Tiefpassfilters kleiner als 200 Hz ist.

## Claims

1. A device for counting particles comprising a detector (12) arranged to produce an electrical measurement signal in response to the passage of one or more particles, and a comparator (56) arranged to compare the measurement signal with a threshold signal and to increment a counting value when the measurement signal exceeds the threshold signal, **characterized in that** it furthermore comprises a threshold-adjusting circuit (50) that applies a lowpass filter (52, 54) to the measurement signal, and that is connected to the comparator (56) in order to use the resulting signal as threshold signal.

2. The device as claimed in claim 1, wherein the comparator (56) and the adjusting circuit (50) are produced analogously, the adjusting circuit (50) comprising a resistor (52) and a capacitor (54) series-connected, and the comparator (56) being an operational amplifier in comparator mode one input of which receives the measurement signal, and the other input of which is connected to the adjusting circuit (50) between the resistor (52) and the capacitor (54).

3. The device as claimed in one of the preceding claims, wherein the comparator (56) is mounted between at least two hysteresis resistors (58, 60).

4. The device as claimed in claim 1, furthermore comprising an analogue-digital converter for digitizing the measurement signal, and wherein the comparator (56) and the threshold-adjusting circuit (50) are produced in digital form.

5. The device as claimed in claim 4, wherein the threshold-adjusting circuit (50) is a finite-impulse-response filter of order 1.

6. The device as claimed in one of the preceding claims, furthermore comprising a circuit (68, 70, 72) ensuring the threshold signal has a minimum value.

**7.** The device as claimed in claim 6, comprising an operational amplifier (68) mounted in follower mode between its output and its positive input, a voltage source (72) connected to its negative input, and a diode (70) between the output of the operational amplifier (68) and the threshold-adjusting circuit (50).

**8.** The device as claimed in claim 7, furthermore comprising a triggering circuit comprising an operational amplifier (62) mounted in comparator mode one input of which receives the measurement signal, and the other input of which is connected to the voltage source.

**9.** A method for counting particles comprising the following operations:

a) producing an electrical measurement signal in response to the detection of the passage of one or more particles by a detector (12);
b) producing a mobile threshold signal by applying a lowpass filter of chosen frequency to the signal from operation a);
c) comparing the measurement signal and the mobile threshold signal and incrementing a counting value when the measurement signal exceeds the mobile threshold signal by a chosen amount.

**10.** The method as claimed in claim 9, wherein the measurement signal is produced according to the Coulter principle, and wherein the cut-off frequency of the lowpass filter is lower than 200 Hz.

**Fig.1**

**Fig.2**

**Fig.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2001032495 A1
- JP S5061077 U
- FR 2653885